(19) Europäisches Patentamt
European Patent Office
Office européen des brevets

(11) EP 4 235 936 A2

(12) EUROPEAN PATENT APPLICATION

(43) Date of publication:
**30.08.2023 Bulletin 2023/35**

(21) Application number: **23173510.1**

(22) Date of filing: **18.11.2020**

(51) International Patent Classification (IPC):
***H01M 50/409*** *(2021.01)*

(52) Cooperative Patent Classification (CPC):
**H01M 4/13; H01M 4/62; H01M 10/052; H01M 10/0565; H01M 50/409; H01M 50/417; H01M 50/42; H01M 50/426; H01M 50/443;**
Y02E 60/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(62) Document number(s) of the earlier application(s) in accordance with Art. 76 EPC:
**20962417.0 / 4 195 344**

(71) Applicant: **LG Energy Solution, Ltd.**
**Seoul 07335 (KR)**

(72) Inventors:
- **HORIKAWA, Masayo**
**Tokyo, 100-6606 (JP)**
- **ORITA, Akihiro**
**Tokyo, 100-6606 (JP)**
- **KURODA, Naoto**
**Tokyo, 100-6606 (JP)**
- **MIKUNI, Hiroki**
**Tokyo, 100-6606 (JP)**

(74) Representative: **Goddar, Heinz J.**
**Boehmert & Boehmert**
**Anwaltspartnerschaft mbB**
**Pettenkoferstrasse 22**
**80336 München (DE)**

Remarks:
This application was filed on 16-05-2023 as a divisional application to the application mentioned under INID code 62.

# (54) LITHIUM ION SECONDARY BATTERY AND SEPARATION MEMBRANE

(57) An aspect of the present invention provides a lithium ion secondary battery comprising: a positive electrode mixture layer; a separation membrane; and a negative electrode mixture layer, in this order, wherein the positive electrode mixture layer comprises a positive electrode active material, a first lithium salt, and a first solvent, wherein the negative electrode mixture layer comprises a negative electrode active material, a second lithium salt, and a second solvent, and wherein the separation membrane comprises at least one resin selected from the group consisting of a resin comprising, as a monomer unit, at least one monomer having (meth)acryloyl group, and a resin comprising, as a monomer unit, at least one olefin comprising fluorine.

*Fig.4*

(a)

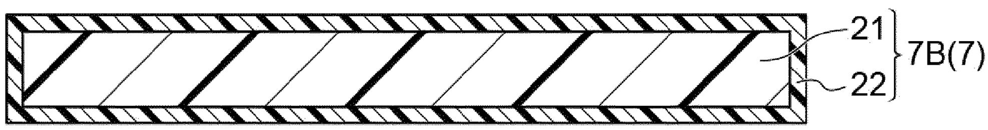




Processed by Luminess, 75001 PARIS (FR)

## Description

### Technical Field

The present invention relates to a lithium ion secondary battery and a separation membrane.

### Background Art

In recent years, due to the widespread of portable electronic equipment, electric cars or the like, further enhancement of performance has been required of secondary batteries represented by lithium ion secondary batteries. For example, investigations have been conducted to enhance the performance of lithium ion secondary batteries by incorporating electrolytes of mutually different kinds into the positive electrode and the negative electrode (for example, Patent Literature 1).

### Citation List

### Patent Literature

Patent Literature 1: Japanese Unexamined Patent Publication No. 2001-110447

### Summary of Invention

### Technical Problem

With regard to a lithium ion secondary battery in which mutually different kinds of electrolytes are incorporated into the positive electrode and the negative electrode, it is important that the solvents contained in the electrolytes are sufficiently separated without being mixed with each other between the positive electrode and the negative electrode. The inventors of the present invention thought of disposing a separation membrane between the positive electrode and the negative electrode in order to separate the solvents in the electrolytes in such a lithium ion secondary battery. This separation membrane requires a characteristic that lithium ions can pass through the separation membrane whereas solvents cannot easily pass through the separation membrane.

It is an object of the present invention to provide a separation membrane that is used for a lithium ion secondary battery containing mutually different solvents in a positive electrode mixture layer and a negative electrode mixture layer, the separation membrane having an excellent separation capacity for these solvents, and a lithium ion secondary battery containing the separation membrane.

### Solution to Problem

The inventors of the present invention found that the solvents contained in a positive electrode mixture layer and a negative electrode mixture layer can be effectively separated by a separation membrane incorporating a specific resin, thus completing the present invention.

According to a first embodiment, the invention relates to a lithium ion secondary battery comprising:

a positive electrode mixture layer;

a separation membrane; and

a negative electrode mixture layer, in this order,

wherein the positive electrode mixture layer comprises a positive electrode active material, a first lithium salt, and a first solvent,

wherein the negative electrode mixture layer comprises a negative electrode active material, a second lithium salt, and a second solvent, and

wherein the separation membrane comprises at least one resin selected from the group consisting of a resin comprising, as a monomer unit, at least one monomer having (meth)acryloyl group, and a resin comprising, as a monomer unit, at least one olefin comprising fluorine.

According to a second embodiment, the invention concerns the lithium ion secondary battery according to the first embodiment, wherein the separation membrane comprises a porous body and the resin retained in the porous body as the resin covers the surface of the porous body.

According to a third embodiment, the invention concerns the lithium ion secondary battery according to the second embodiment, wherein the porous body is made of a polymer.

According to a fourth embodiment, the invention concerns the lithium ion secondary battery according to the third embodiment, wherein the polymer is a polymer other than the resin comprising, as monomer unit, at least one monomer having a (meth)acryloyl group, and other than the resin comprising, as a monomer unit, at least one olefin comprising fluorine.

According to a fifth embodiment, the invention concerns the lithium ion secondary battery according to the third or the fourth embodiment, wherein the polymer is a polyolefin.

According to a sixth embodiment, the invention concerns the lithium ion secondary battery according to any of the first to the fifth embodiment, wherein the first solvent comprises a cyclic carbonate or a combination of two or more kinds thereof.

According to a seventh embodiment, the invention concerns the lithium ion secondary battery according to any of the first to the sixth embodiment, wherein the first solvent comprises a combination of at least two of ethylene carbonate, propylene carbonate, vinylene carbonate and γ-butyrolactone.

According to an eighth embodiment, the invention concerns the lithium ion secondary battery according to any of the first to the seventh embodiment, wherein the second lithium salt is of the same kind as the first lithium salt.

According to a nineth embodiment, the invention relates to a separation membrane comprising at least one resin selected from the group consisting of a resin comprising, as a monomer unit, at least one monomer having a (meth)acryloyl group, and a resin comprising, as a monomer unit, at least one olefin comprising fluorine, wherein the separation membrane is for being disposed in a lithium ion secondary battery comprising:

a positive electrode mixture layer comprising a positive electrode active material, a first lithium salt, and a first solvent; and

a negative electrode mixture layer comprising a negative electrode active material, a second lithium salt and a second solvent different from the first solvent, and

wherein the separation membrane is for being disposed between the positive electrode mixture layer and the negative electrode mixture layer.

According to a tenth embodiment, the invention concerns a separation membrane according to the nineth embodiment, wherein the separation membrane comprises a porous body and the resin retained in the porous body as the resin covers the surface of the porous body.

According to an eleventh embodiment, the invention concerns a separation membrane according to the tenth embodiment, wherein the porous body is made of a polymer.

According to a twelfth embodiment, the invention concerns a separation membrane according to the eleventh embodiment, wherein the polymer is a polymer other than the resin comprising, as monomer unit, at least one monomer having a (meth)acryloyl group, and other than the resin comprising, as a monomer unit, at least one olefin comprising fluorine.

According to a thirteenth embodiment, the invention concerns a separation membrane according to any of the nineth to the twelfth embodiment, wherein the polymer is a polyolefin.

According to a fourteenth embodiment, the invention concerns a separation membrane according to any of the nineth to the thirteenth embodiment, wherein the first solvent comprises a cyclic carbonate or a combination of two or more kinds thereof.

According to a fifteenth embodiment, the invention concerns a separation membrane according to any of the nineth to the fourteenth embodiment, wherein the first solvent comprises a combination of at least two of ethylene carbonate, propylene carbonate, vinylene carbonate and γ-butyrolactone.

According to a sixteenth embodiment, the invention concerns a separation membrane according to any of the nineth to the fifteenth embodiment, wherein the second lithium salt is of the same kind as the first lithium salt.

According to a seventeenth embodiment, the invention relates to a method for preparing a separation membrane according to any of the claims 9 to 16, wherein the method comprises applying a slurry on the surface of the porous body, wherein the slurry comprises at least one monomer having a (meth)acryloyl group.

According to an eighteenth embodiment, the invention relates to a lithium ion secondary battery comprising:

a positive electrode mixture layer;

a separation membrane; and

a negative electrode mixture layer, in this order,

wherein the positive electrode mixture layer comprises a positive electrode active material, a first lithium salt, and a first solvent,

wherein the negative electrode mixture layer comprises a negative electrode active material, a second lithium salt, and a second solvent different from the first solvent, and

wherein the separation membrane comprises at least one resin selected from the group consisting of a resin comprising, as a monomer unit, at least one monomer having a (meth)acryloyl group, and a resin comprising, as a monomer unit, at least one olefin comprising fluorine.

According to a nineteenth embodiment, the invention concerns a lithium ion secondary battery according to any of the nineth to the eighteenth embodiment, wherein the separation membrane comprises a porous body and the resin retained in the porous body.

According to a twentieth embodiment, the invention concerns a lithium ion secondary battery according to any of the nineteenth embodiment, wherein the porous body is made of a polymer.

According to a twenty-first embodiment, the invention concerns a lithium ion secondary battery according to any of the nineteenth or the twentieth embodiment, wherein the separation membrane further comprises inorganic oxide particles retained in the porous body.

According to a twenty-second embodiment, the invention concerns a lithium ion secondary battery according to any of the eighteenth to the twenty-first embodiment, wherein the separation membrane further comprises a third lithium salt and a third solvent.

According to an twenty-third embodiment, the invention relates to separation membrane comprising at least one resin selected from the group consisting of a resin comprising, as a monomer unit, at least one monomer having a (meth)acryloyl group, and a resin comprising, as a monomer unit, at least one olefin comprising fluorine,
wherein the separation membrane is for being disposed in a lithium ion secondary battery comprises:

a positive electrode mixture layer comprising a positive electrode active material, a first lithium salt, and a first solvent; and

a negative electrode mixture layer comprising a negative electrode active material, a second lithium salt, and a second solvent different from the first solvent, and

wherein the separation membrane is for being disposed between the positive electrode mixture layer and the negative electrode mixture layer.

According to a twenty-fourth embodiment, the invention concerns a separation membrane according to the twenty-third embodiment comprising a porous body and the resin retained in the porous body.

According to a twenty-fifth embodiment, the invention concerns a separation membrane according to the twenty-fourth embodiment, wherein the porous body is made of a polymer.

According to a twenty-sixth embodiment, the invention concerns a separation membrane according to the twenty-third to the twenty-fifth embodiment further comprising inorganic oxide particles retained in the porous body.

According to a twenty-seventh embodiment, the invention concerns a separation membrane according to the twenty-third to the twenty-sixth embodiment further comprising a third lithium salt and a third solvent.

An aspect of the present invention provides a lithium ion secondary battery containing: a positive electrode mixture layer; a separation membrane; and a negative electrode mixture layer, in this order, wherein the positive electrode mixture layer contains a positive electrode active material, a first lithium salt, and a first solvent, the negative electrode mixture layer contains a negative electrode active material, a second lithium salt, and a second solvent different from the first solvent, and the separation membrane contains at least one resin selected from the group consisting of a resin containing, as a monomer unit, at least one monomer having a (meth)acryloyl group, and a resin containing, as a monomer unit, at least one olefin containing fluorine.

Another aspect of the present invention provides a separation membrane containing at least one resin selected from the group consisting of a resin containing, as a monomer unit, at least one monomer having a (meth)acryloyl group, and a resin containing, as a monomer unit, at least one olefin containing fluorine, wherein the separation membrane is for being disposed in a lithium ion secondary battery containing: a positive electrode mixture layer comprising a positive

electrode active material, a first lithium salt, and a first solvent; and a negative electrode mixture layer comprising a negative electrode active material, a second lithium salt, and a second solvent different from the first solvent, and wherein the separation membrane is for being disposed between the positive electrode mixture layer and the negative electrode mixture layer.

The separation membrane may contain a porous body and the resin retained in the porous body. In this case, the porous body is preferably made of a polymer. The separation membrane may further contain inorganic oxide particles retained in the porous body.

The separation membrane may further contain a third lithium salt and a third solvent.

## Advantageous Effects of Invention

According to the present invention, a separation membrane to be used in a lithium ion secondary battery containing mutually different solvents in a positive electrode mixture layer and a negative electrode mixture layer, the separation membrane having an excellent separation capacity for these solvents, and a lithium ion secondary battery containing this separation membrane can be provided.

## Brief Description of Drawings

FIG. 1 is a perspective view illustrating a lithium ion secondary battery according to an embodiment.

FIG. 2 is an explosive perspective view illustrating an embodiment of an electrode group in the lithium ion secondary battery shown in FIG. 1.

FIG. 3 is a schematic cross-sectional view illustrating an embodiment of the separation membrane.

FIG. 4 is a schematic cross-sectional view illustrating another embodiment of the separation membrane.

## Description of Embodiments

In the following description, embodiments of the present invention will be described with appropriate reference to the drawings. However, the present invention is not intended to be limited to the following embodiments.

According to the present specification, a (meth)acryloyl group means an acryloyl group or a methacryloyl group corresponding thereto. The same also applies to other similar expressions such as (meth)acrylate.

FIG. 1 is a perspective view illustrating a lithium ion secondary battery according to an embodiment. As shown in FIG. 1, a lithium ion secondary battery 1 according to an embodiment is a so-called laminated secondary battery that contains an electrode group 2 and a bag-shaped battery outer package 3 housing the electrode group 2. The electrode group 2 is provided with a positive electrode current collecting tab 4 and a negative electrode current collecting tab 5. The positive electrode current collecting tab 4 and the negative electrode current collecting tab 5 protrude from the inside of the battery outer package 3 to the outside such that the positive electrode current collector and the negative electrode current collector (details will be described below) are each electrically connectable to the outside of the lithium ion secondary battery 1. According to another embodiment, the lithium ion secondary battery 1 may have a shape other than the laminated type (a coin type, a cylindrical type, or the like).

The battery outer package 3 may be, for example, a container formed from a laminated film. The laminated film may be, for example, a laminated film in which a polymer film such as a polyethylene terephthalate (PET) film, a metal foil such as aluminum, copper, or stainless steel, and a sealant layer such as polypropylene are laminated in this order.

FIG. 2 is an explosive perspective view illustrating an embodiment of the electrode group 2 in the lithium ion secondary battery 1 shown in FIG. 1. As shown in FIG. 2, the electrode group 2 according to the present embodiment contains a positive electrode 6, a separation membrane 7, and a negative electrode 8 in this order. The positive electrode 6 contains a positive electrode current collector 9 and a positive electrode mixture layer 10 provided on the positive electrode current collector 9. The positive electrode current collector 9 is provided with the positive electrode current collecting tab 4. The negative electrode 8 contains a negative electrode current collector 11 and a negative electrode mixture layer 12 provided on the negative electrode current collector 11. The negative electrode current collector 11 is provided with the negative electrode current collecting tab 5.

The positive electrode current collector 9 is made of, for example, aluminum, titanium, stainless steel, nickel, baked carbon, a conductive polymer, or a conductive glass. The thickness of the positive electrode current collector 9

may be, for example, 1 μm or more and may be 50 μm or less.

The negative electrode current collector 11 is made of, for example, copper, stainless steel, nickel, aluminum, titanium, baked carbon, a conductive polymer, a conductive glass, or an aluminum-cadmium alloy. The thickness of the negative electrode current collector 11 may be, for example, 1 μm or more and may be 50 μm or less.

According to an embodiment, the positive electrode mixture layer 10 contains a positive electrode active material, a lithium salt (first lithium salt), and a solvent (first solvent).

The positive electrode active material may be, for example, a lithium oxide. Examples of the lithium oxide include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, and $Li_xMn_{2-y}M_yO_4$ (in each formula, M represents at least one element selected from the group consisting of Na, Mg, Sc, Y, Mn, Fe, Co, Cu, Zn, Al, Cr, Pb, Sb, V, and B (provided that M is an element different from the other elements in each formula); x = 0 to 1.2, y = 0 to 0.9, and z = 2.0 to 2.3). The lithium oxide represented by $Li_xNi_{1-y}M_yO_z$ may be $Li_xNi_{1-(y1+y2)}Co_{y1}Mn_{y2}O_z$ (provided that x and z are similar to those mentioned above; $y_1$ = 0 to 0.9, $y_2$ = 0 to 0.9; and y1 + y2 = 0 to 0.9), and examples include $LiNi_{1/3}Co_{1/3}Mn_{1/3}O_2$, $LiNi_{0.5}Co_{0.2}Mn_{0.3}O_2$, $LiNi_{0.6}Co_{0.2}Mn_{0.2}O_2$, or $LiNi_{0.8}Co_{0.1}Mn_{0.1}O_2$. The lithium oxide represented by $Li_xNi_{1-y}M_yO_z$ may be $Li_xNi_{1-(y3+y4)}Co_{y3}Al_{y4}O_z$ (provided that x and z are similar to those mentioned above; $y_3$ = 0 to 0.9, $y_4$ = 0 to 0.9; and y3 + y4 = 0 to 0.9), and may be, for example, $LiNi_{0.8}Co_{0.15}Al_{0.05}O_2$.

The positive electrode active material may be a phosphate of lithium. Examples of the phosphate of lithium include lithium manganese phosphate ($LiMnPO_4$), lithium iron phosphate ($LiFePO_4$), lithium cobalt phosphate ($LiCoPO_4$), and lithium vanadium phosphate ($Li_3V_2(PO_4)_3$). The above-mentioned positive electrode active materials are used singly or in combination of two or more kinds thereof.

The content of the positive electrode active material may be 70% by mass or more, 80% by mass or more, or 85% by mass or more, based on the total amount of the positive electrode mixture layer. The content of the positive electrode active material may be 95% by mass or less, 92% by mass or less, or 90% by mass or less, based on the total amount of the positive electrode mixture layer.

The first lithium salt may be, for example, at least one selected from the group consisting of $LiPF_6$, $LiBF_4$, $LiClO_4$, $LiNO_3$, $LiB(C_6H_5)_4$, $LiCH_3SO_3$, $CF_3SO_2OLi$, $LiN(SO_2F)_2$ (LiFSI, lithium bisfluorosulfonylimide), $LiN(SO_2CF_3)_2$ (LiTFSI, lithium bistrifluoromethanesulfonylimide), and $LiN(SO_2CF_2CF_3)_2$.

The content of the first lithium salt may be 0.5 mol/L or more, 0.7 mol/L or more, or 0.8 mol/L or more, and may be 1.5 mol/L or less, 1.3 mol/L or less, or 1.2 mol/L or less, based on the total amount of the first solvent.

The first solvent is a solvent for dissolving the first lithium salt. The first solvent may be, for example, a cyclic carbonate such as ethylene carbonate, propylene carbonate, vinylene carbonate, vinyl ethylene carbonate, fluoroethylene carbonate, or difluoroethylene carbonate; a chain-like carbonate such as dimethyl carbonate, diethyl carbonate, or ethyl methyl carbonate; a cyclic ester such as γ-butyrolactone, γ-valerolactone, δ-valerolactone, ε-caprolactone, or γ-hexanolactone; an ether such as tetrahydrofuran, 1,3-dioxane, dimethoxyethane, diethoxyethane, methoxyethoxyethane, glyme, diglyme, triglyme, or tetraglyme; a phosphoric acid ester such as a phosphoric acid triester; a nitrile such as acetonitrile, benzonitrile, adiponitrile, or glutaronitrile; a chain-like sulfone such as dimethylsulfone or diethylsulfone; a cyclic sulfone such as sulfolane; or a cyclic sulfonic acid ester such as propanesultone. The first solvents are used singly or in combination of two or more kinds thereof.

A solvent that is preferably used as the first solvent is a solvent having oxidation resistance, such as acetonitrile or ethylene carbonate. As a result, the oxidation resistance of the positive electrode mixture layer 10 can be increased.

The content of the first solvent contained in the positive electrode mixture layer 10 can be appropriately set to the extent that can dissolve the first lithium salt; however, for example, the content may be 10% by mass or more and may be 80% by mass or less, based on the total amount of the positive electrode mixture layer.

The positive electrode mixture layer 10 may further contain a binder and a conductive material as other components.

The binder may be a polymer containing at least one selected from the group consisting of ethylene tetrafluoride, vinylidene fluoride, hexafluoropropylene, acrylic acid, maleic acid, ethyl methacrylate, methyl methacrylate, and acrylonitrile, as a monomer unit; or a rubber such as a styrene-butadiene rubber, an isoprene rubber, or an acrylic rubber. The binder is preferably polyvinylidene fluoride or a copolymer containing hexafluoropropylene and vinylidene fluoride, as monomer units.

The content of the binder may be 0.3% by mass or more, 0.5% by mass or more, 1% by mass or more, or 1.5% by mass or more, and may be 10% by mass or less, 8% by mass or less, 6% by mass or less, or 4% by mass or less, based on the total amount of the positive electrode mixture layer.

The conductive material may be a carbon material such as carbon black, acetylene black, graphite, carbon fibers, or carbon nanotubes, or the like. These conductive materials are used singly or in combination of two or more kinds thereof.

The content of the conductive material may be 0.1% by mass or more, 1% by mass or more, or 3% by mass or more, based on the total amount of the positive electrode mixture layer. From the viewpoint of suppressing an increase in the volume of the positive electrode 6 and a concomitant decrease in the energy density of the lithium ion secondary

battery 1, the content of the conductive material is preferably 15% by mass or less, more preferably 10% by mass or less, and even more preferably 8% by mass or less, based on the total amount of the positive electrode mixture layer.

The thickness of the positive electrode mixture layer 10 may be 5 μm or more, 10 μm or more, 15 μm or more, or 20 μm or more, and may be 100 μm or less, 80 μm or less, 70 μm or less, or 50 μm or less.

According to an embodiment, the negative electrode mixture layer 12 contains a negative electrode active material, a lithium salt (second lithium salt), and a solvent (second solvent).

Regarding the negative electrode active material, those commonly used in the field of energy devices can be used. Specific examples of the negative electrode active material include metal lithium, lithium titanate ($Li_4Ti_5O_{12}$), a lithium alloy, a metal compound other than the foregoing ones, a carbon material, a metal complex, and an organic polymer compound. These negative electrode active materials are used singly or in combination of two or more kinds thereof. Examples of the carbon material include graphite such as natural graphite (flaky graphite and the like) and artificial graphite; amorphous carbon; carbon fibers; and carbon black such as acetylene black, Ketjen black, channel black, furnace black, lamp black, and thermal black. From the viewpoint of obtaining a larger theoretical capacity (for example, 500 to 1500 Ah/kg), the negative electrode active material may be a negative electrode active material containing silicon as a constituent element, a negative electrode active material containing tin as a constituent element, or the like. Among these, the negative electrode active material may be a negative electrode active material containing silicon as a constituent element.

The negative electrode active material containing silicon as a constituent element may be an alloy containing silicon as a constituent element and may be, for example, an alloy containing silicon and at least one selected from the group consisting of nickel, copper, iron, cobalt, manganese, zinc, indium, silver, titanium, germanium, bismuth, antimony, and chromium, as constituent elements. The negative electrode active material containing silicon as a constituent element may be an oxide, a nitride, or a carbide, and specific examples include silicon oxides such as SiO, $SiO_2$, and LiSiO; silicon nitrides such as $Si_3N_4$ and $Si_2N_2O$; and silicon carbides such as SiC.

The content of the negative electrode active material may be 60% by mass or more, 65% by mass or more, or 70% by mass or more, based on the total amount of the negative electrode mixture layer. The content of the negative electrode active material may be 99% by mass or less, 95% by mass or less, or 90% by mass or less, based on the total amount of the negative electrode mixture layer.

The type and the content of the second lithium salt may be similar to those of the first lithium salt contained in the above-mentioned positive electrode mixture layer 10. The second lithium salt may be of the same kind as the first lithium salt or may be of different kinds.

The second solvent is a solvent for dissolving the second lithium salt. Regarding the second solvent, a solvent similar to that used as the above-mentioned first solvent can be used; however, a solvent different from the first solvent is used. As a result, since solvents respectively suitable for the positive electrode 6 and the negative electrode 8 can be used, various performances of the lithium ion secondary battery 1, such as the energy density and the life prolongation, can be enhanced.

The solvent that is preferably used as the second solvent is a solvent having reduction resistance, such as γ-butyrolactone or tetrahydrofuran. As a result, reductive decomposition of the second solvent contained in the negative electrode mixture layer 12 can be suppressed.

The content of the second solvent contained in the negative electrode mixture layer 12 can be appropriately set to the extent that can dissolve the second lithium salt; however, for example, the content may be 10% by mass or more and may be 80% by mass or less, based on the total amount of the negative electrode mixture layer.

The negative electrode mixture layer 12 may further contain a binder and a conductive material as other components. The types and the contents of the binder and the conductive material may be similar to the types and the contents of the binder and the conductive material in the above-mentioned positive electrode mixture layer 10.

The thickness of the negative electrode mixture layer 12 may be 10 μm or more, 15 μm or more, or 20 μm or more, and may be 100 μm or less, 80 μm or less, 70 μm or less, 50 μm or less, 40 μm or less, or 30 μm or less.

The separation membrane 7 is a separation membrane for being disposed between the positive electrode mixture layer 10 and the negative electrode mixture layer 12 in the lithium ion secondary battery 1. This separation membrane 7 plays the role of separating the first solvent and the second solvent contained in the positive electrode mixture layer 10 and the negative electrode mixture layer 12 from each other and preventing the respective solvents from mixing with each other. It is possible to conduct delivery and acceptance of lithium ions through the separation membrane 7.

The separation membrane 7 contains at least one resin selected from the group consisting of a resin containing, as a monomer unit, at least one monomer having a (meth)acryloyl group represented by the following formula (1) (hereinafter, also referred to as "acrylic resin"), and a resin containing, as a monomer unit, at least one olefin containing fluorine (hereinafter, also referred to as "fluororesin"). The separation membrane 7 may contain this resin only or may contain this resin and other components.

FIG. 3 is a schematic cross-sectional view illustrating an embodiment of the separation membrane 7. This

separation membrane 7A contains at least one resin selected from the group consisting of a resin containing, as a monomer unit, at least one monomer having a (meth)acryloyl group, and a resin containing, as a monomer unit, at least one olefin containing fluorine, and also contains a lithium salt (third lithium salt) and a solvent (third solvent).

The acrylic resin may be a homopolymer containing, as a monomer unit, only one monomer having a (meth)acryloyl group represented by the following formula (1), or may be a copolymer containing two or more of the monomers as monomer units. The content of the monomer having a (meth)acryloyl group may be 70% by mass or more, 80% by mass or more, or 90% by mass or more, based on the total amount of the monomer units contained in the acrylic resin. The acrylic resin may consist of the monomer units having a (meth)acryloyl group.

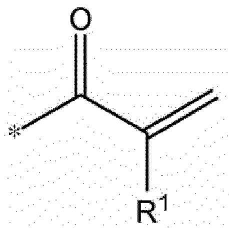

(1)

In the formula (1), $R^1$ represents a hydrogen atom or a methyl group; and the symbol * represents a linking bond.

Examples of the acrylic resin include a polyalkyl (meth)acrylate such as polymethyl (meth)acrylate; a poly(polyalkylene glycol di(meth)acrylate) such as poly(polyethylene glycol di(meth)acrylate); and poly(meth)acrylic acid.

The fluororesin refers to a resin containing, as a monomer unit, at least one olefin containing fluorine. The fluororesin may be a homopolymer containing, as a monomer unit, only one olefin containing fluorine, or may be a copolymer containing two or more of the monomers as monomer units. The content of the monomer unit, which is an olefin containing fluorine, may be 70% by mass or more, 80% by mass or more, or 90% by mass or more, based on the total amount of the monomer units contained in the fluororesin. The fluororesin may consist of monomer units, which are olefins containing fluorine.

Examples of the fluororesin include polytetrafluoroethylene (PTFE) and polyvinylidene fluoride (PVDF).

Regarding the third lithium salt, a salt similar to the above-mentioned first lithium salt can be used. The third lithium salt may be of the same kind as the above-mentioned first lithium salt and the second lithium salt or may be of different kinds.

The content of the third lithium salt may be 1% by mass or more, 1.5% by mass or more, or 2% by mass or more, and may be 30% by mass or less, 25% by mass or less, or 20% by mass or less, based on the total amount of the separation membrane.

The third solvent is a solvent for dissolving the third lithium salt and plays the role of further enhancing the lithium ion conductivity of the separation membrane 7A. Regarding the third solvent, a solvent similar to the above-mentioned first solvent can be used. The third solvent may be of the same kind as the above-mentioned first solvent and the second solvent or may be of different kinds.

The content of the third solvent may be 1% by mass or more, 3% by mass or more, or 5% by mass or more or may be 60% by mass or less, 55% by mass or less, or 50% by mass or less, based on the total amount of the separation membrane.

From the viewpoint of further increasing the separation capacity of the separation membrane 7A, the thickness of the separation membrane 7A is preferably 100 μm or more, 200 μm or more, or 500 μm or more. From the viewpoint of increasing the energy density of the lithium ion secondary battery 1, the thickness of the separation membrane 7 is preferably 800 μm or less, 600 μm or less, or 400 μm or less.

Since the separation membrane 7A contains the above-described resin and lithium salt, the separation membrane 7A has lithium ion conductivity. Having lithium ion conductivity means having a property in which, in the presence of a lithium salt, lithium ions derived from the lithium salt can be conducted. Whether the separation membrane 7A can conduct lithium ions can be checked by measuring the ion conductivity of the separation membrane 7A, and when the peak of ion conductivity measured when 1% to 40% by mass of a lithium salt is added against the separation membrane 7A is $1 \times 10^{-6}$ S/cm or more, the separation membrane 7A can have lithium ion conductivity.

The separation membrane 7A can be produced by, for example, the following method. That is, a method for producing the separation membrane 7A contains a step of forming a slurry into a membrane form, the slurry containing at least one monomer selected from the group consisting of a monomer that can form a resin containing at least one monomer having a (meth)acryloyl group as a monomer unit (hereinafter, also referred to as "acryl monomer") and a monomer that can form a resin containing at least one olefin containing fluorine as a monomer unit (hereinafter, also referred to as "fluorine monomer"), a third lithium salt, and a third solvent, as mentioned above, and then polymerizing the monomer.

A method of forming a slurry into a membrane form is a method of, for example, installing a frame having any size on one surface of a base material such as a PET sheet, and pouring a slurry into this frame. Alternatively, the slurry may also be formed into a membrane form by applying the monomer on one surface of a base material by a doctor blade method, a dipping method, a spraying method, or the like.

In order to polymerize the monomer, a polymerization initiator may be added to the slurry. The polymerization initiator may be a thermal polymerization initiator or may be a photopolymerization initiator.

The thermal polymerization initiator may be an azo compound such as azobisisobutyronitrile or azobis(2-methylbutyronitrile).

The photopolymerization initiator may be 2-hydroxy-2-methyl-1-phenylpropanone, diphenyl (2,4,6-trimethylbenzoyl)phosphine oxide, or the like.

When a polymerization initiator is added, the content of the polymerization initiator may be 0.01 parts by mass or more, 0.05 parts by mass or more, 0.1 parts by mass or more, 1 part by mass or more, 5 parts by mass or more, 10 parts by mass or more, or 20 parts by mass or more and may be 50 parts by mass or less, 40 parts by mass or less, 30 parts by mass or less, 20 parts by mass or less, 15 parts by mass or less, or 10 parts by mass or less, with respect to 100 parts by mass of the monomer.

According to an embodiment, the method of polymerizing the monomer is a method of applying heat under predetermined conditions. The heating temperature may be, for example, 50°C to 90°C. The heating time may be appropriately adjusted depending on the heating temperature; however, the heating time is, for example, 1 minute to 2 hours.

According to another embodiment, the method of polymerizing the monomer is a method of irradiating the monomer with light under predetermined conditions. According to an embodiment, the monomer may be polymerized by irradiating the monomer with light containing wavelengths in the range of 200 to 400 nm (ultraviolet light).

View (a) of FIG. 4 and view (b) of FIG. 4 are schematic cross-sectional views illustrating other embodiments of the separation membrane 7. These separation membranes 7B and 7C contain a porous body 21 and a resin 22 retained in the porous body 21. The porous body 21 has a porous structure having pores formed therein. By using the porous body 21, the resin 22 is easily retained, and a superior separation capacity for the solvent can be obtained.

In the separation membrane 7B shown in view (a) of FIG. 4, the resin 22 is retained in the porous body 21 as the resin covers the surface of the porous body 21. The resin 22 preferably covers the entire surface of the porous body 21.

In the separation membrane 7C shown in view (b) of FIG. 4, the resin 22 is retained in the porous body 21 as the porous body 21 is impregnated with the resin 22. The resin 22 is present within the pores of the porous body 21.

The porous body 21 is preferably made of a polymer. The polymer that forms the porous body 21 is not particularly limited as long as it is a polymer other than the above-mentioned acrylic resin and fluororesin. Examples of the polymer that forms the porous body 21 include polyalkylene glycols such as polyethylene glycol, polypropylene glycol, and polytetramethylene ether glycol, a polyolefin, and polyvinyl acetate.

From the viewpoint of making the resin 22 easily retainable, the Gurley value of the porous body 21 is preferably 20 seconds/100 cc or less, more preferably 10 seconds/100 cc or less, and even more preferably 5 seconds/100 cc or less. The Gurley value of the porous body 21 may be, for example, 1 second/100 cc or more. The Gurley value of the porous body 21 can be obtained by measuring the time taken for 100 cc of air to permeate through the porous body 21 by using a Gurley type densometer (for example, No. 323 manufactured by YASUDA SEIKI SEISAKUSHO, LTD.) and calculating the air permeability (seconds/100 cc).

From the viewpoint of making the resin 22 easily retainable, the porosity of the porous body 21 is preferably 30% by volume or more, more preferably 40% by volume or more, and even more preferably 50% by volume or more, based on the volume of the porous body 21. From the viewpoint of maintaining the strength of the porous body, the porosity of the porous body 21 is preferably 90% by volume or less, more preferably 80% by volume or less, and even more preferably 70% by volume or less, based on the volume of the porous body 21, and the porosity of the porous body 21 can be calculated by the following formula, from the volume a determined from the weight and true density of the porous body and the volume b determined by measuring the area and thickness of the porous body.

$$\text{Porosity} = (1 - a/b) \times 100$$

The resin 22 is at least one resin selected from the group consisting of a resin (acrylic resin) containing at least one monomer having a (meth)acryloyl group as a monomer unit, and a resin (fluororesin) containing at least one olefin containing fluorine as a monomer unit, as mentioned above.

With regard to the separation membranes 7B and 7C, from the viewpoint of further increasing the separation capacity of the separation membrane 7, the content of the resin 22 retained in the porous body 21 is preferably 20% by volume or more, more preferably 30% by volume or more, and even more preferably 40% by volume or more, based on the total amount of the separation membrane. From the viewpoint of maintaining the strength of the separation

membrane, the content of the resin 22 retained in the porous body 21 is preferably 90% by volume or less, more preferably 85% by volume or less, and even more preferably 80% by volume or less, based on the total amount of the separation membrane.

The separation membranes 7B and 7C may further contain inorganic oxide particles. As a result, the ion conductivities of the separation membranes 7B and 7C can be further increased. When the separation membrane 7B contains inorganic oxide particles, according to an embodiment, the surface of the porous body 21 is coated with a composition containing the above-mentioned resin 22 and inorganic oxide particles. When the separation membrane 7C contains inorganic oxide particles, according to an embodiment, the porous body 21 is impregnated with a composition containing the above-mentioned resin 22 and inorganic oxide particles.

The inorganic oxide particles may be, for example, particles of $Li_2O$, $Al_2O_3$, $TiO_2$, $GeO_2$, $SiO_2$, $P_2O_5$, and $Li_7La_3Zr_2O_{12}$. The inorganic oxide particles may be particles in which the main crystal phase is $Li_{1+x+y}Al_xTi_{2-x}Si_yP_{3-y}O_{12}$ ($0 \leq x \leq 1$, $0 \leq y \leq 1$; preferably $0 \leq x \leq 0.4$, $0 < y \leq 0.6$; and even more preferably $0.1 \leq x \leq 0.3$, $0.1 < y \leq 0.4$). Regarding the inorganic oxide particles, these particles are used singly or in combination of two or more kinds thereof.

The average particle size of the inorganic oxide particles may be 2 μm or more, 10 μm or more, or 50 μm or more, and may be 250 μm or less, 180 μm or less, or 100 μm or less. The average particle size of the inorganic oxide particles is measured by measuring the particle size distribution with a laser diffraction type particle size distribution analyzer.

From the viewpoint of further increasing the ion conductivities of the separation membranes 7B and 7C, the content of the inorganic oxide particles is preferably 0.1% by volume or more, more preferably 0.3% by volume or more, and even more preferably 0.5% by volume or more, based on the total amount of the separation membrane. From the viewpoint of further increasing the separation capacity of the separation membrane 7, the content of the inorganic oxide particles is preferably 20% by volume or less, more preferably 10% by volume or less, and even more preferably 5% by volume or less.

The separation membranes 7B and 7C may contain a third lithium salt and a third solvent as other components. Specific aspects of the third lithium salt and the third solvent are as described above. In this case, according to an embodiment, the surface of the porous body 21 is coated with a composition containing the above-mentioned resin 22, a third lithium salt, and a third solvent.

When the separation membranes 7B and 7C contain the third lithium salt, the content of the third lithium salt may be 1% by mass or more, 1.5% by mass or more, or 2% by mass or more, and may be 30% by mass or less, 25% by mass or less, or 20% by mass or less, based on the total amount of the separation membrane.

When the separation membranes 7B and 7C contain the third solvent, the content of the third solvent may be 1% by mass or more, 3% by mass or more, or 5% by mass or more, and may be 60% by mass or less, 55% by mass or less, or 50% by mass or less, based on the total amount of the separation membrane.

The thickness of the separation membranes 7B and 7C maybe in a range similar to the thickness of the above-mentioned separation membrane 7A.

Since the separation membranes 7B and 7C contain the above-described resin (acrylic resin and/or fluororesin), the separation membranes 7B and 7C have lithium ion conductivity. A method of checking whether the membrane has lithium ion conductivity is as described above.

The separation membranes 7B and 7C can be produced by, for example, the following method. That is, a method for producing the separation membranes 7B and 7C contains a step of preparing a porous body 21, retaining a slurry containing a monomer that can form a resin 22 (at least one monomer selected from the group consisting of a monomer that can form a resin containing at least one monomer having a (meth)acryloyl group as a monomer unit, and a monomer that can form a resin containing at least one olefin containing fluorine as a monomer unit) in the porous body 21, and then polymerizing the monomer in the slurry.

Regarding the porous body 21, a porous body having the above-mentioned properties may be produced by a known method, or a commercially available product having the above-mentioned properties may be prepared.

The slurry contains a monomer that can form the above-mentioned resin 22. The slurry may contain the monomer only. When the separation membranes 7B and 7C contain inorganic oxide particles, a third lithium salt, and a third solvent, the slurry may further contain these.

The slurry may further contain a polymerization initiator. As a result, the monomer in the slurry can be suitably polymerized, and the separation membranes 7B and 7C can be suitably produced. The polymerization initiator may be a thermal polymerization initiator or a photopolymerization initiator and can be appropriately selected according to the purpose. The polymerization initiator may be similar to that used for the above-mentioned separation membrane 7A.

The content of the polymerization initiator may be 0.5% by mass or more, 1% by mass or more, 5% by mass or more, 10% by mass or more, or 20% by mass or more, and may be 50% by mass or less, 40% by mass or less, 30% by mass or less, 10% by mass or less, 5% by mass or less, or 3% by mass or less, based on the total amount of the slurry.

The method of retaining the slurry in the porous body 21 may be, for example, in the case of obtaining the separation membrane 7B, a method of applying the slurry on the surface of the porous body 21. The application method

may be a doctor blade method, a dipping method, a spraying method, or the like. At this time, preferably the slurry is applied over the entire surface of the porous body 21.

The method of retaining the slurry in the porous body 21 may be, for example, in the case of obtaining the separation membrane 7C, a method of impregnating the porous body 21 with the slurry. The impregnation method is, for example, a method of impregnating the porous body 21 with the slurry for 1 to 10 minutes. As a result, the slurry penetrates into the pores of the porous body 21.

Subsequently, the monomer in the slurry is polymerized, and thereby the separation membranes 7B and 7C in which the resin 22 is retained in the porous body 21 can be obtained.

The method of polymerizing the monomer is, when the slurry contains a thermal polymerization initiator, a method of applying heat to the porous body 21 having the slurry retained therein, under predetermined conditions. The heating temperature and the heating time may be similar to those of the method for producing the above-mentioned separation membrane 7A.

The method of polymerizing the monomer is, when the slurry contains a photopolymerization initiator, a method of irradiating the porous body 21 having the slurry retained therein, with light under predetermined conditions. The method of irradiating with light may be similar to the method for producing the above-mentioned separation membrane 7A.

Subsequently, the method for producing the lithium ion secondary battery 1 will be described. The method for producing the lithium ion secondary battery 1 according to an embodiment contains a step of obtaining the positive electrode 6 containing the positive electrode mixture layer 10 containing a positive electrode active material, a first lithium salt, and a first solvent; a step of obtaining the negative electrode 8 containing the negative electrode mixture layer 12 containing a negative electrode active material, a second lithium salt, and a second solvent different from the first solvent; and a step of providing the separation membrane 7 between the positive electrode 6 and the negative electrode 8. The order of each step is arbitrary.

In the above-described production method, specific aspects of the positive electrode active material, the first lithium salt, the first solvent, the negative electrode active material, the second lithium salt, the second solvent, and the separation membrane 7 are as described above.

In the step of obtaining a positive electrode and the step of obtaining a negative electrode, the positive electrode 6 and the negative electrode 8 can be obtained by utilizing a known method. For example, the materials used for the positive electrode mixture layer 10 or the negative electrode mixture layer 12 are dispersed in an appropriate amount of a dispersing medium by using a kneading machine, a dispersing machine, or the like, and a positive electrode mixture or a negative electrode mixture in a slurry form is obtained. Subsequently, this positive electrode mixture or negative electrode mixture is applied on the positive electrode current collector 9 or the negative electrode current collector 11 by a doctor blade method, a dipping method, a spraying method, or the like, and the dispersing medium is volatilized to obtain the positive electrode 6 and the negative electrode 8. At this time, the dispersing medium may be water, N-methyl-2-pyrrolidone (NMP), or the like.

The step of providing the separation membrane 7 between the positive electrode 6 and the negative electrode 8 may contain a step of producing the above-mentioned separation membrane 7 (separation membranes 7A, 7B, or 7C). In this case, after the separation membrane 7 is obtained, the positive electrode 6, the separation membrane 7 (separation membrane 7A, 7B, or 7C) obtainable by the above-mentioned method, and the negative electrode 8 are laminated by, for example, lamination. As a result, the electrode group 2 containing the positive electrode 6, the negative electrode 8, and the separation membrane 7 provided between the positive electrode 6 and the negative electrode 8 can be obtained. This electrode group 2 is housed in the battery outer package 3 to obtain the lithium ion secondary battery 1.

## Examples

Hereinafter, the present invention will be described more specifically by way of Examples; however, the present invention is not intended to be limited to these Examples.

[Example 1]

A frame made of silicon rubber (4×4 cm, thickness 1 mm) was installed on a PET sheet (8×8 cm, thickness 0.035 mm), and a slurry obtained by mixing 6.0 g of a polyethylene glycol diacrylate represented by the following formula (3) (n in the formula = 14, trade name: NK ESTER A-600, manufactured by SHIN-NAKAMURA CHEMICAL Co., Ltd.):

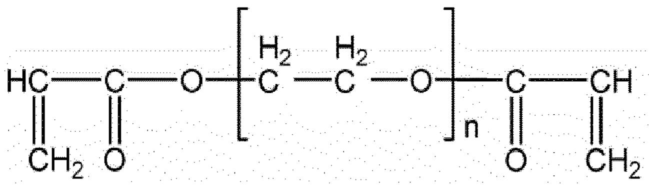

(3)

,

4.0 g of diglyme (manufactured by FUJIFILM Wako Pure Chemical Corp.), 1.4 g of lithium nitrate (manufactured by FUJIFILM Wako Pure Chemical Corp.), and 1.0 g of azobisisobutyronitrile (manufactured by FUJIFILM Wako Pure Chemical Corp.) was placed in the frame. A separation membrane made of poly(polyethylene glycol diacrylate) was obtained by heating the slurry at 60°C for 1 hour by using a hot plate to polymerize polyethylene glycol diacrylate. The separation membrane was removed from the frame and then was submitted to a test described below.

[Example 2]

A separation membrane was produced in the same manner as in Example 1, except that the polyethylene glycol diacrylate used in Example 1 was changed to polytetrafluoroethylene (manufactured by FUJIFILM Wako Pure Chemical Corp.), and azobisisobutyronitrile (manufactured by FUJIFILM Wako Pure Chemical Corp.) was not added. As a result, a separation membrane made of polytetrafluoroethylene (PTFE) was obtained.

[Example 3]

A porous body (Gurley value: 1 second/100 cc, porosity: 60% by volume, thickness: 20 μm) made of a polyolefin was prepared. A slurry produced in the same manner as in Example 1 was applied over the entire surface of the porous body, and then the slurry was heated at 60°C for 1 hour to polymerize polyethylene glycol diacrylate. As a result, a separation membrane in which poly(polyethylene glycol diacrylate) was applied on a porous body was obtained.

[Example 4]

A separation membrane was produced in the same manner as in Example 3, except that the polyethylene glycol diacrylate used in Example 3 was changed to polytetrafluoroethylene similar to that used in Example 2. As a result, a separation membrane in which PTFE was applied on a porous body was obtained.

[Example 5]

A separation membrane was produced in the same manner as in Example 3, except that a slurry obtained by further adding inorganic oxide particles $Li_7La_3Zr_2O_{12}$ (manufactured by FUJIFILM Wako Pure Chemical Corp.) to a proportion of 1% by volume with respect to the total amount of the separation membrane, was applied on a porous body. As a result, a separation membrane in which poly(polyethylene glycol diacrylate) and inorganic oxide particles were applied on a porous body made of a polymer having lithium ion conductivity was obtained.

[Example 6]

A separation membrane was produced in the same manner as in Example 5, except that the polyethylene glycol diacrylate used in Example 5 was changed to tetrafluoroethylene similar to that used in Example 2. As a result, a separation membrane in which PTFE and $SiO_2$ were applied on a porous body made of a polymer having lithium ion conductivity was obtained.

[Comparative Example 1]

A separation membrane was produced in the same manner as in Example 1, except that the polyethylene glycol diacrylate used in Example 1 was changed to ethyl cyanoacrylate (manufactured by FUJIFILM Wako Pure Chemical Corp.). As a result, a separation membrane made of polyethyl cyanoacrylate was obtained.

[Comparative Example 2]

A separation membrane was produced in the same manner as in Comparative Example 1, except that the

polyethylene glycol diacrylate used in Example 3 was changed to ethyl cyanoacrylate similar to that used in Comparative Example 1. As a result, a separation membrane in which polyethyl cyanoacrylate was applied on a porous body made of a polymer having lithium ion conductivity was obtained.

[Comparative Example 3]

A separation membrane was produced in the same manner as in Example 5, except that the polyethylene glycol diacrylate used in Example 5 was changed to ethyl cyanoacrylate similar to that used in Comparative Example 1. As a result, a separation membrane in which polyethyl cyanoacrylate and inorganic oxide particles were applied on a porous body made of a polymer having lithium ion conductivity was obtained.

<Evaluation of solvent separation capacity>

A separation membrane according to an Example or a Comparative Example and a separator (UP3085, manufactured by Ube Industries, Ltd.) were stacked, these were interposed between two sheets made of silicon rubber (thickness 0.5 mm), and this assembly was disposed in between an H-type cell. Dimethyl carbonate (DMC) was introduced into the cell on the separation membrane side, and the external appearance of the separator after a lapse of predetermined number of days was observed by visual inspection. When a separation membrane has an excellent solvent separation capacity, since it is difficult for DMC to permeate through the separation membrane, it is difficult for DMC to penetrate into the separator; however, when a separation membrane has a poor solvent separation capacity, DMC permeates through the separation membrane and penetrates into the separator. Therefore, the separation capacity of a separation membrane for a solvent (solvent corresponding to the first solvent and the second solvent) can be evaluated by observing the external appearance of the separator and checking the presence or absence of penetration of DMC into the separator. When there was no penetration of DMC into the separator even after a lapse of one day from the initiation of test, the result is indicated as "≥ 1 day" in Table 1 to Table 3, and in this case, it can be said that the separation membrane has an excellent solvent separation capacity. On the other hand, in Table 1 to Table 3, when penetration of DMC was observed after a lapse of one day, the result is indicated as "< 1 day". As shown in Table 1 to Table 3, in the separation membranes according to the Examples, there was no penetration of DMC into the separator even after a lapse of one day or longer; however, in the separation membranes according to the Comparative Examples, DMC penetrated into the separator after a lapse of one day.

[Table 1]

| | Example 1 | Example 2 | Comparative Example 1 |
|---|---|---|---|
| Type of resin | Poly(polyethylene glycol diacrylate) | PTFE | Polyethyl cyanoacrylate |
| Solvent separation capacity (number of days elapsed) | ≥ 1 day | | < 1 day |

[Table 2]

| | Example 3 | Example 4 | Comparative Example 2 |
|---|---|---|---|
| Type of resin | Poly(polyethylene glycol diacrylate) | PTFE | Polyethyl cyanoacrylate |
| Content of resin (based on total amount of separation membrane) | 70% by volume | | |
| Gurley value of porous body | 1 sec/100 cc | | |
| Porosity of porous body | 60% by volume | | |
| Solvent separation capacity (number of days elapsed) | ≥ 1 day | < 1 day | |

[Table 3]

| | Example 5 | Example 6 | Comparative Example 3 |
|---|---|---|---|
| Type of resin | Poly(polyethylene glycol diacrylate) | PTFE | Polyethyl cyanoacrylate |
| Content of resin (based on total amount of separation membrane) | 69% by volume | | |
| Content of inorganic oxide particles (based on total amount of separation membrane) | 1% by volume | | |
| Gurley value of porous body | 1 sec/100 cc | | |
| Porosity of porous body | 60% by volume | | |
| Solvent separation capacity (number of days elapsed) | ≥ 1 day | | < 1 day |

**Reference Signs List**

1: lithium ion secondary battery, 2: electrode group, 3: battery outer package, 4: positive electrode current collecting tab, 5: negative electrode current collecting tab, 6: positive electrode, 7, 7A, 7B, 7C: separation membrane, 8: negative electrode, 9: positive electrode current collector, 10: positive electrode mixture layer, 11: negative electrode current collector, 12: negative electrode mixture layer, 21: porous body, 22: resin.

**Claims**

**1.** A lithium ion secondary battery comprising:

a positive electrode mixture layer;
a separation membrane; and
a negative electrode mixture layer, in this order,
wherein the positive electrode mixture layer comprises a positive electrode active material, a first lithium salt, and a first solvent,
wherein the negative electrode mixture layer comprises a negative electrode active material, a second lithium salt, and a second solvent, and
wherein the separation membrane comprises at least one resin selected from the group consisting of a resin comprising, as a monomer unit, at least one monomer having (meth)acryloyl group, and a resin comprising, as a monomer unit, at least one olefin comprising fluorine.

**2.** The lithium ion secondary battery according to claim 1, wherein the separation membrane comprises a porous body and the resin retained in the porous body as the resin covers the surface of the porous body.

**3.** The lithium ion secondary battery according to claim 2, wherein the porous body is made of a polymer.

**4.** The lithium ion secondary battery according to claim 3, wherein the polymer is a polymer other than the resin comprising, as monomer unit, at least one monomer having a (meth)acryloyl group, and other than the resin comprising, as a monomer unit, at least one olefin comprising fluorine.

**5.** The lithium ion secondary battery according to claim 3 or 4, wherein the polymer is a polyolefin.

**6.** The lithium ion secondary battery according to any of the preceding claims, wherein the first solvent comprises a cyclic carbonate or a combination of two or more kinds thereof.

**7.** The lithium ion secondary battery according to any of the preceding claims, wherein the first solvent comprises a combination of at least two of ethylene carbonate, propylene carbonate, vinylene carbonate and γ-butyrolactone.

8. The lithium ion secondary battery according to any of the preceding claims, wherein the second lithium salt is of the same kind as the first lithium salt.

9. A separation membrane comprising at least one resin selected from the group consisting of a resin comprising, as a monomer unit, at least one monomer having a (meth)acryloyl group, and a resin comprising, as a monomer unit, at least one olefin comprising fluorine, wherein the separation membrane is for being disposed in a lithium ion secondary battery comprising:

   a positive electrode mixture layer comprising a positive electrode active material, a first lithium salt, and a first solvent; and
   a negative electrode mixture layer comprising a negative electrode active material, a second lithium salt and a second solvent different from the first solvent, and
   wherein the separation membrane is for being disposed between the positive electrode mixture layer and the negative electrode mixture layer.

10. The separation membrane according to claim 9, wherein the separation membrane comprises a porous body and the resin retained in the porous body as the resin covers the surface of the porous body.

11. The separation membrane according to claim 10, wherein the porous body is made of a polymer.

12. The separation membrane according to claim 11, wherein the polymer is a polymer other than the resin comprising, as monomer unit, at least one monomer having a (meth)acryloyl group, and other than the resin comprising, as a monomer unit, at least one olefin comprising fluorine.

13. The separation membrane according to claim 9 or 12, wherein the polymer is a polyolefin.

14. The separation membrane according to any of the claims 9 to 13, the first solvent comprises a cyclic carbonate or a combination of two or more kinds thereof.

15. The separation membrane according to any of the claims 9 to 14, wherein the first solvent comprises a combination of at least two of ethylene carbonate, propylene carbonate, vinylene carbonate and $\gamma$-butyrolactone.

16. The separation membrane according to any of the claims 9 to 15, wherein the second lithium salt is of the same kind as the first lithium salt.

17. A method for preparing a separation membrane according to any of the claims 9 to 16, wherein the method comprises applying a slurry on the surface of the porous body, wherein the slurry comprises at least one monomer having a (meth)acryloyl group.

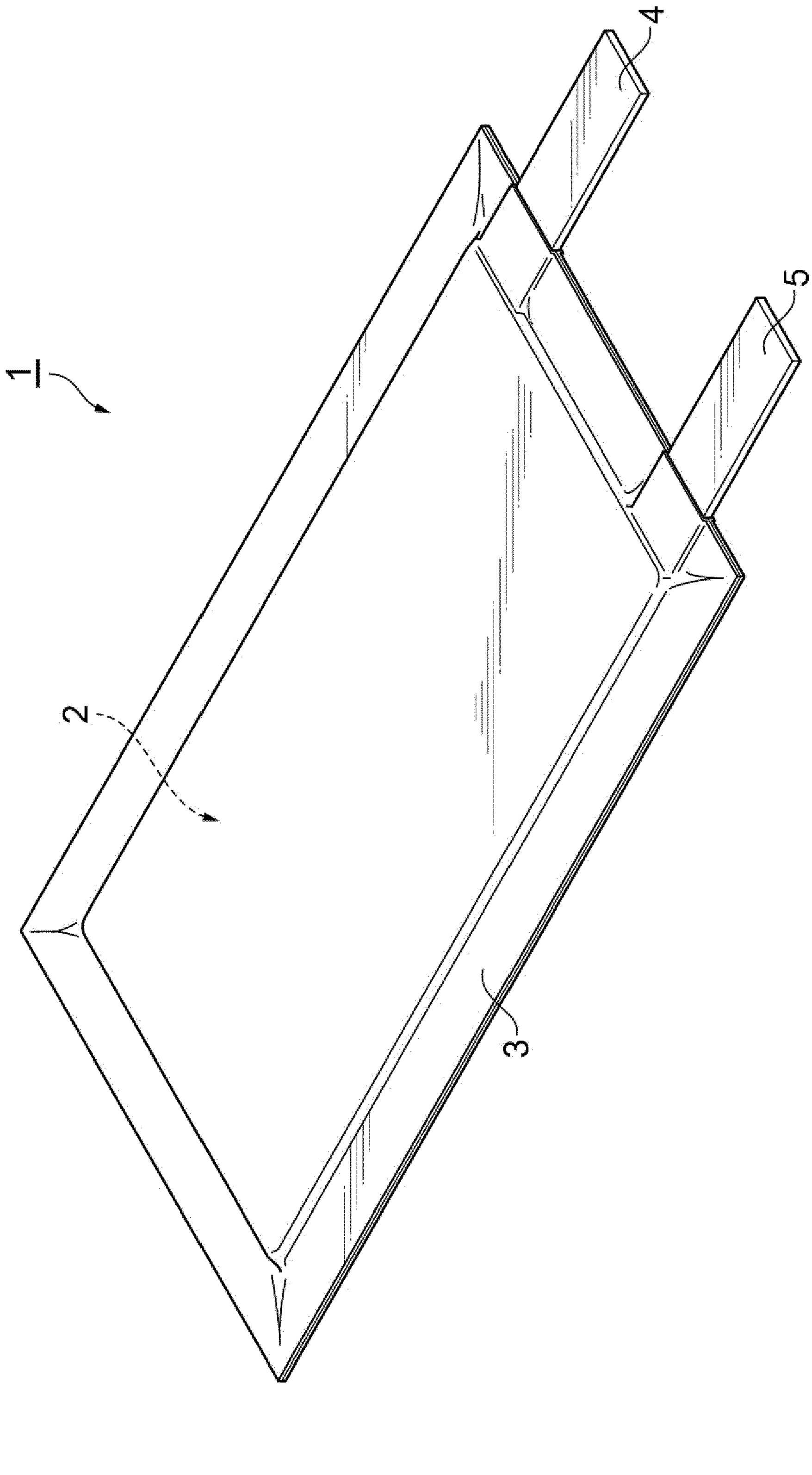


Fig.1

Fig.2

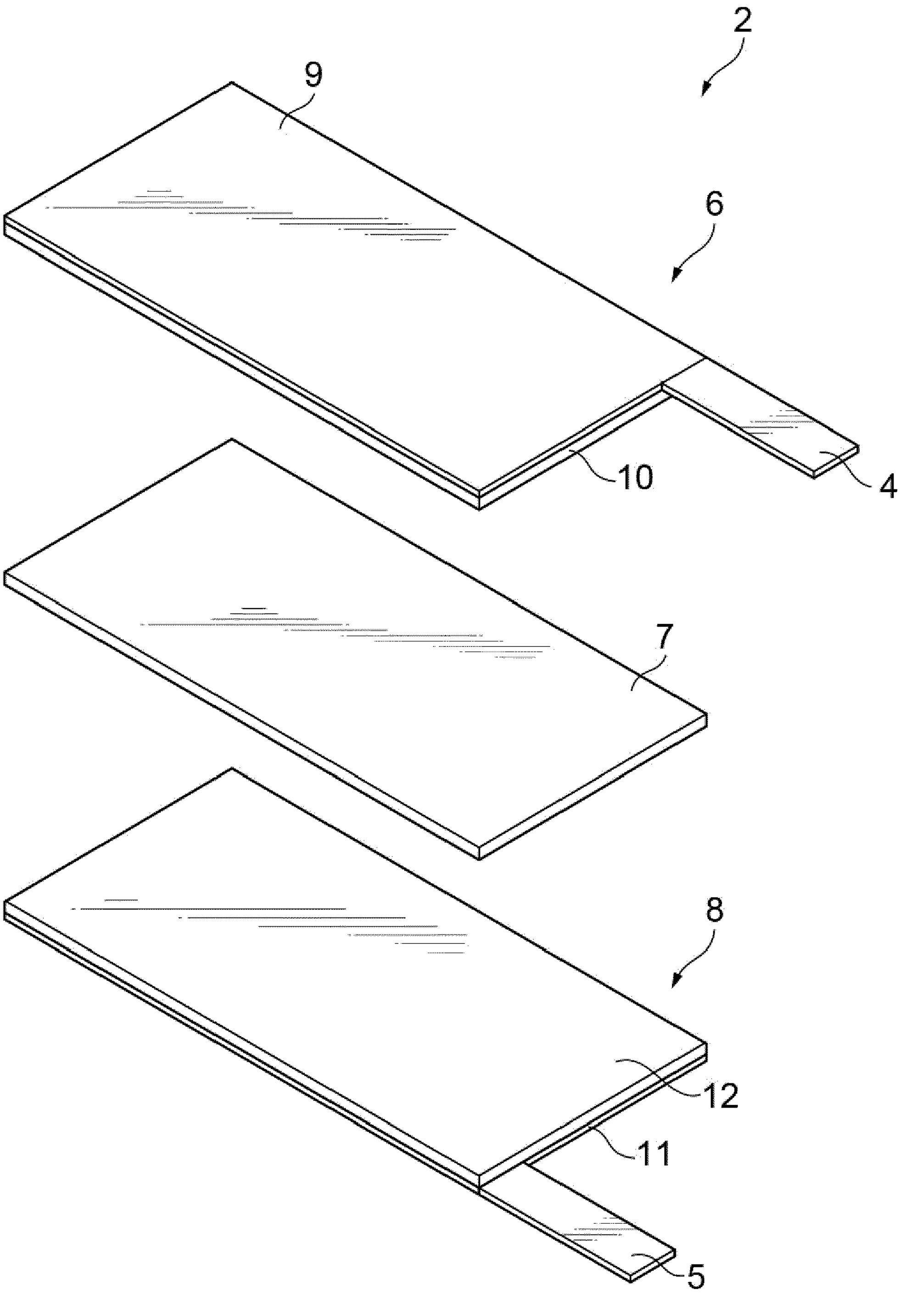

Fig.3

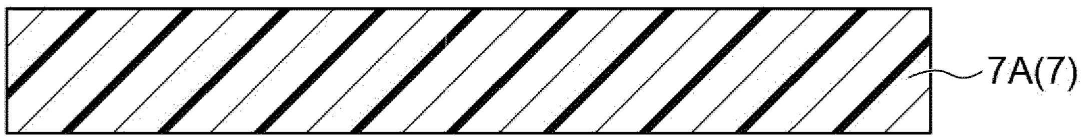

Fig.4

(a)

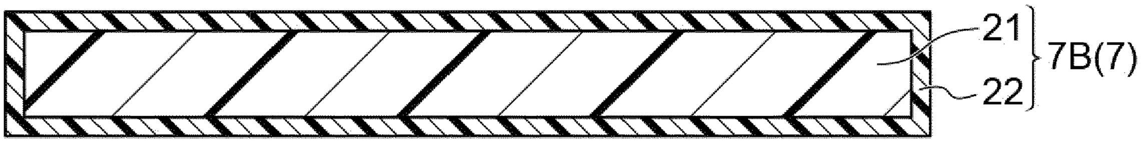


(b)

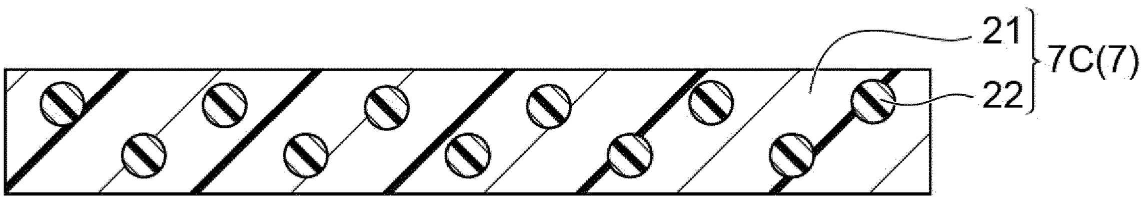

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001110447 A